Europäisches Patentamt

European Patent Office

Office européen des brevets

(11) Publication number: **0 069 088**
A1

## (12) EUROPEAN PATENT APPLICATION

(21) Application number: **82830176.2**

(51) Int. Cl.³: **A 01 D 31/00**

(22) Date of filing: **15.06.82**

(30) Priority: **19.06.81 IT 4250981**

(43) Date of publication of application: **05.01.83**
**Bulletin 83/1**

(84) Designated Contracting States: **DE FR NL**

(71) Applicant: **SIDER MECCANICA di SCHINCAGLIA Lauro -
ROSSINI Guiseppe - GALLANI Roberto S.n.c., Via delle
Basse 16/B Monticelli Terme, Montechiarugolo (Parma)
(IT)**

(72) Inventor: **Schincaglia, Lauro, Via Montepelato Nord, 10,
Monticelli Terme Parma (IT)**
Inventor: **Rossini, Giuseppe, Via Pilastrello, 9, Pilastrello
Parma (IT)**
Inventor: **Gallani, Roberto, Via Antica Bassa,
Malandriano Parma (IT)**

(74) Representative: **Bonfreschi, Mario, Bugnion S.p.A. Viale
Trento Trieste, 25, I-41100 Modena (IT)**

(54) **Machine for lifting onions or other root-crops, in particular of the type towed by farm-tractor.**

(57) The machine described herein comprises a vibrating channel (5) disposed rearward of a blade (3) and designed to carry along a crop whilst shaking it free of soil, the work-surface of said channel consisting of a number of rods (21) disposed within vertical and longitudinal planes and spaced sufficiently close together to create a surface having the semblance of a grid. The rods (21) are subject to a special alternating motion imparted at low amplitude and high frequency which brings about both efficient separation of soil from the crop and orderly and steady progress of the latter along the channel itself (5).

A chute (16) located to the rear of said channel (5) provides for the crop's being re-deposited on the ground continuously and systematically.

Machine for lifting onions or other root crops, in particular, of the type towed by farm tractor.

The invention described herein is intended for agricultural use, and more precisely for lifting onions from the soil where they grow —as is well known— with their bulbous section lying below ground level.
The machine to which the invention relates is of the type which lifts up a layer of earth, bringing with it the onions (or other bulbous root) themselves, and carries both together by way of a conveyor device forming part of the machine to a point at the machine rear, at the same time separating the onions from the earth in order to deposit them once more on the ground whereupon gathering up may proceed either manually or with the use of further mechanical means.
One object of the invention described herein is that of bringing about an efficient and all but total separation of earth from onions (or other bulbous root) once these have been lifted, and this without the crop being damaged by knocks or other adverse effects.
A further object of the invention is that of ensuring that the onions (or other bulbous root), once lifted and shaken out, are re-deposited upon the ground in an orderly fashion with bulb-downward and stalk-upward, each and every time —the idea being that the stalk or leaf affords protection to the bulbous root in the face of strong sunlight and, what is more, the onions are more easily gathered up, especially in the case of harvesting by hand.

Another object of the invention is that of setting forth a machine simple in construction and as a result inexpensive to build, as well as being functional and reliable.

These and other objects are arrived at by the machine to which the invention relates which is of the type towed by farm-tractor and characterised by the fact that it comprises a vibrating channel 5 for moving along and shaking-out the crop, whose work-surface is flat to all intents and purposes and consists basically of a grid designed to bear up the crop and retain it thus; said channel 5 being subject to alternating motion imparted at low amplitude and high frequency, whilst being joined at its entry-end with a cutting element or blade 3 raked so as to penetrate the ground to a predetermined depth sufficient to lift earth and onions together and draw them up onto the channel 5. Additional characteristics embodied by the invention may be found listed in those claims following on claim 1.

Further features and advantages of the invention will emerge more clearly from the detailed description of a preferred though not exclusive embodiment that follows, illustrated as a strictly unlimitative example with the aid of accompanying drawings, in which:

fig 1 shows a vertical side-elevation of the machine to which the invention relates, certain of its parts being omitted the better to reveal others;

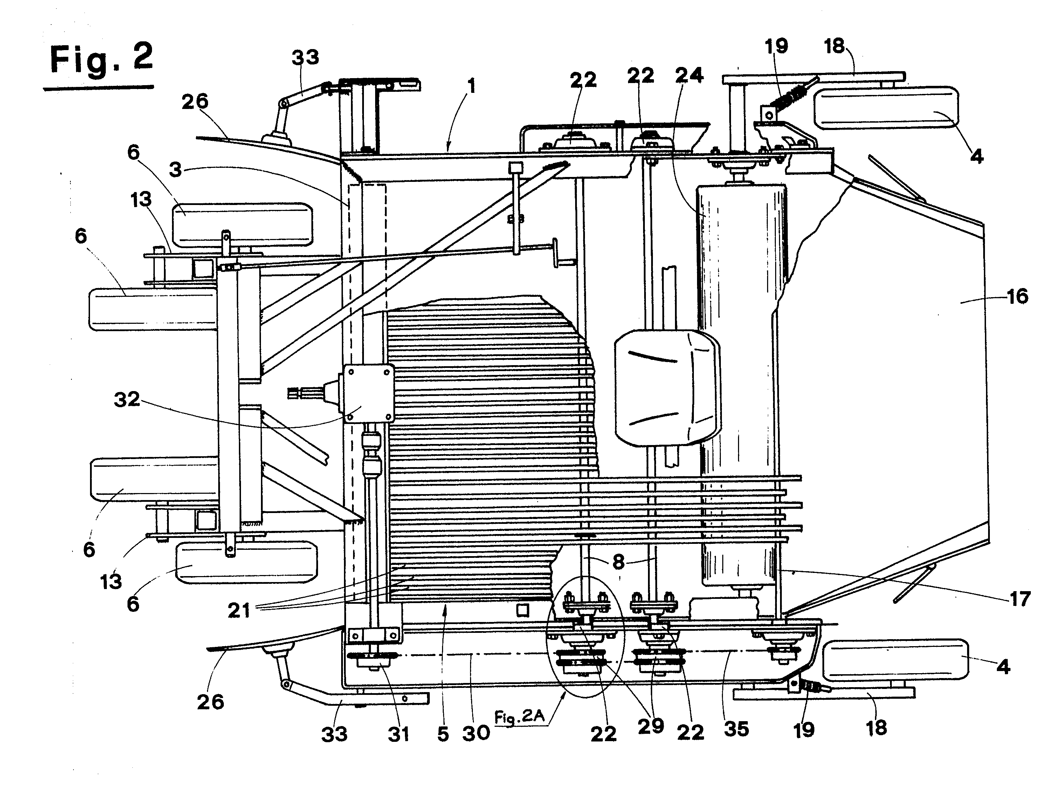

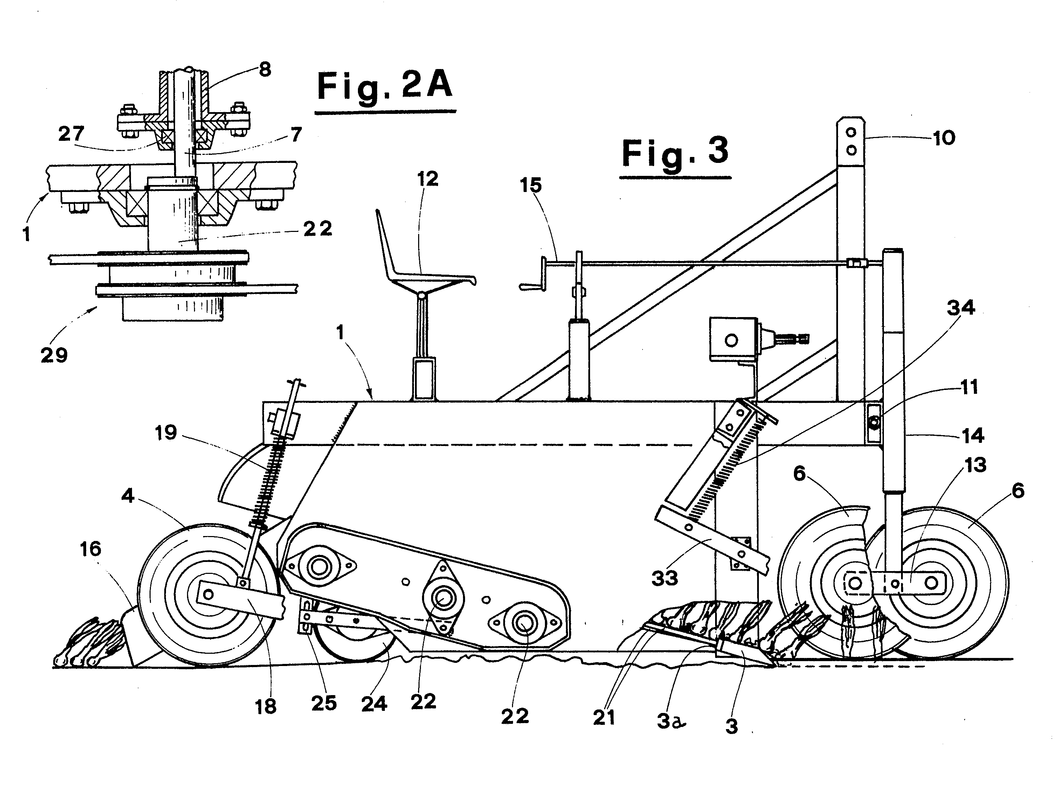

fig 2 shows the plan from above of the machine illustrated in fig 1;

fig 2A shows a detail of fig 2 on larger scale;

fig 3 shows a vertical elevation of the machine to which the invention relates —in this case the opposite side of the same machine as in fig 1, likewise with certain parts omitted the better to reveal others.

The machine thus illustrated comprises a chassis 1 which sits on the ground by way of two pairs of front wheels 6 and a single pair of rear wheels 4, being of a type designed for connection to a farm-tractor's three-point linkage —this through one upper point 10 and two lower points 11 located on the chassis.

An operator-seat 12 is positioned at the rear-end of the chassis 1.

The front wheels 6 are made up of two wheel-pairs each mounted to a horizontal rocker-arm 13 whose mid-section hinges with one respective of two support-members 14 affixed to chassis 1 uppermost and variable for length. These support-members, or jacking-struts 14 may be lengthened or shortened by conventional means worked by a handle 15, thus giving height-adjustment of chassis 1 with respect to ground-level.

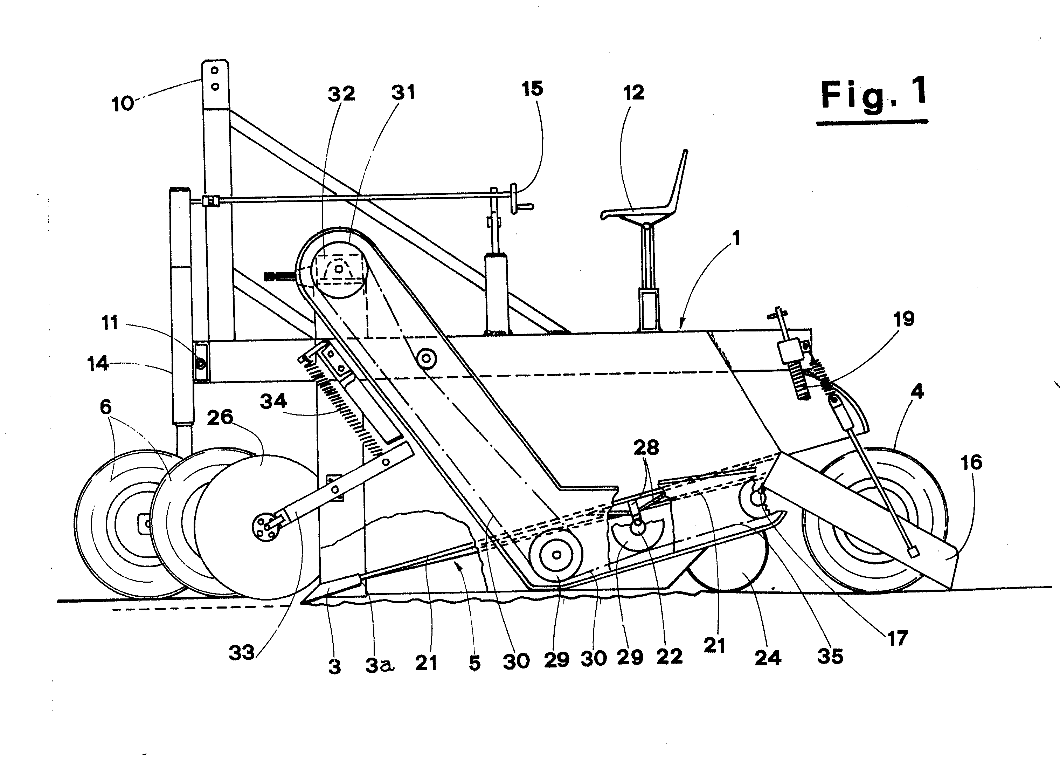

The rear wheels 4 (only part-drawn in fig 1 the better to reveal other machine-parts) lie outside the breadth of chassis 1 when viewed in plan, and are connected thereto by a pair of lever-arms 18 hinged with the chassis itself and designed to bear up the latter by way of compression-adjustable suspension coil-springs 19.

A roller 24, positioned beneath chassis 1 and marginally forward of rear-wheels 4, and whose lengthwise dimension occupies all but the entire width of chassis 1, is designed to roll over the ground; the height of said roller 24 with respect to the chassis being adjustable by conventional means —e.g. by tightening a bolt within slot 25. Thus, the rear-end of chassis 1 sits on the ground by way both of wheels 4 and of roller 24, and by adjusting the roller-height with respect to the chassis itself, and tightening or slackening-off said springs 19, the height of the chassis rear-end may be adjusted with respect to ground-level. At the front lower region of chassis 1 immediately to the rear of wheels 6 one has a cutting element or blade 3, permanently affixed and set at a raked angled so as to penetrate the soil to a predetermined depth and lift a continuous layer of earth —continuous to all practical intents and purposes— and with it, the onions. The transverse length of blade 3 corresponds basically to the width of the machine itself and to that of roller 24, provision being made for two cutter-discs 26 disposed with axes horizontal at either side of the actual blade and urged against the earth by elastic means which comprise a pair of arms 33 and a pair of tensioning springs 34; the action of said discs 26 being to cut through at the sides of that layer of earth lifted by blade 3 so as to form a substantially precise "carpet" of soil as the latter digs in continuously, raising it up.

The blade 3 joins with the entry-end of a vibrating channel 5 whose work-surface is fundamentally flat and canted upward following the direction of the crop travelling along the channel itself —in other words, toward the rear of the machine.

The channel's working area is of width equal to the transverse length of blade 3 and stretches therefrom toward the rear of the machine passing over and beyond roller 24.

The work-surface proper of channel 5 consists of a number of thin rods 21 lying within a like number of parallel and adjacent would-be vertical and longitudinal planes, and disposed one next the other in close proximity so as to create a grid capable of bearing up the lifted crop. The rods 21 themselves are divided into two distinct sets, each single rod of the one set disposed alternately with single rods of the remaining set, —the single rods of an individual set moving together as one.

Rods 21 are in fact in receipt of oscillatary motion imparted at low amplitude and high frequency (as will be explained more fully hereinafter) and brought about within the would-be vertical and longitudinal plane aforesaid within which each of the single rods lies; the motion-cycle of one set of rods being retarded by one half-revolution with respect to the remaining set. The actual movement of rods 21 involves their being invested with a circular trajectory —or at any rate looped— either in mid-section or at the channel exit-end of the rod 21 whilst remaining anchored at their entry-ends by respective holes located at the rear edge 3a of blade 3, the entry-end of single rods 21 being inserted thereinto; the hole thus located in blade 3 allowing a single rod to slide back and forth along its own axis, oscillating about the centre of the hole itself, and preventing any perpendicular movement of the rod with respect to its own axis.

Motion is imparted to each of the sets of rods 21 by means of an eccentric drive mechanism comprising a transverse and horizontal shaft 7 whose ends are affixed eccentrically to a pair of bearer-wheels 22 made fast to the chassis 1 and turning on a common axis of rotation lying parallel to shaft 7 aforesaid, the latter inserted within a tubular element 8 whose ability to turn freely about shaft 7 is ensured by its being associated therewith through a pair of bearings 27. The outer surfaces of two such tubular elements 8 provide the necessary support for each respective set of rods 21, which attach thereto by way of reinforced support elements or mountings 28. It is envisaged that one of each of the pairs of bearer-wheels 22 be driven so as to turn at high speed, this by virtue of its being united with a gear-wheel 29 disposed coaxially and receiving drive transmitted by chains 30, a further gear 31 and an angle-drive unit 32 linking up with the farm-tractor's power take-off. The two wheels 2 thus in receipt of drive are spaced apart, the angular position of one retarded with respect to the other by one half-revolution.

A metal chute 16 positioned at the machine-rear end and following-on from the channel-exit 5 provides for the crop's being dropped onto the ground once more in the wake of the machine itself.

The chute is made subject to vibratory motion to the end of easing the onions' descent, said vibration being produced by means of a horizontal and transverse shaft 17 caused to rotate eccentrically at high speed in such a way that the axis thereof remains parallel with itself in terms of the trajectory described, said shaft 17 being made fast to chute 16 by way of a pair of bearings and receiving its rotary propulsion from a chain 35 driven by one of the two driven wheels 22 aforesaid. The machine thus described, to which the invention relates, functions as follows:

By jacking-up or letting down struts 14, it will be possible to adjust the working-depth to which blade 3 cuts into the soil. Adjustment of springs 19 and of the height of roller 24 makes it possible to raise or lower the machine rear-end, thus altering the angle of rake assumed by blade 3 with respect to the ground.

The machine is towed over the field by farm-tractor whereupon blade 3 —aided by cutter-discs 26— lifts a continuous layer of earth (practically speaking) and with it, the onions. Earth and onions alike are urged up channel 5 by dint of the machine's progressing forward, and the onions begin to be shaken out thanks to the high-speed alternating motion produced by rods 21, which in imparting this high-speed vibration to the onions bring about a twin-effect:  viz. the onions are completely freed of soil, which drops onto the ground beneath, and at the same time are carried along and up channel 5 both steadily and in an orderly fashion —that is to say, a layer or carpet of onions which all but retain the same position in which they were lifted from the field, with bulb-downward and leafy-growth uppermost.

The carpet of onions thus created moves along up channel 5 not only by virtue of the vibration generated by rods 21, but also by dint of the fact that further earth and onions gathering continually at the channel entry on being lifted by blade 3 perform the function of pushing forward those onions already brought up into the machine.

Once through channel 5, the onions pass onto chute 16 from whence they are deposited on the ground in an orderly fashion, the vibrating action produced by the chute serving to bring about an unbroken and systematic descent of the onions thereupon.

The roller 24 serves to even out ground that has been disturbed by the digging action of blade 3. The fact that chassis 1 sits on the ground at front by way of pairs of wheels 6 mounted on rocker-arms means that the actual digging action produced by blade 3 comes about in a neater and more continous fashion —this by virtue of the fact that wheel-pairs of the kind 6 react with less violence than simple conventional wheels, when travelling over uneven ground.

Numerous modifications of a practical nature may be made to constructional  details of the invention described herein without by any means straying from within bounds of protection afforded to the basic concept as supported by the following claims.

0069088

Claims

1) Machine for lifting onions or other root crops,
in particular, of the type towed by farm-tractor,
characterised by the fact that it comprises a
vibrating channel (5) for moving along and shaking-
out the crop, whose work-surface is flat to all
intents and purposes and consists basically of a
grid designed to bear up the crop and retain it
thus; said channel (5) being subject to alternating
motion of low amplitude and at high frequency,
being joined at its entry-end with a cutting-
element or blade (3) set at a rake so as to penetrate the ground to a predetermined depth sufficient
to lift earth and onions together and draw both up
into the machine.

2) Machine according to claim 1 characterised by the
fact that the work-surface of said channel (5)
consists of a number of thin rods (21) lying within
a like number of would-be vertical-and-longitudinal
planes and disposed one next the other in close
proximity so as to create a grid capable of bearing
up the lifted crop, said rods being divided into
two distinct sets with each single rod of the one
set disposed alternately with single rods of the
remaining set —the single rods of an individual
set moving together as one; said rods (21) being
in receipt of alternating motion imparted at low
amplitude and high frequency brought about for
the most part within that would-be vertical and
longitudinal plane aforesaid wherein each single
rod lies; the motion-cycle of one set of rods being retarded by one half-revolution with respect to the remaining set.

3) Machine according to claim 1 characterised by the fact that movement of said rods (21) describes a circular or at any rate looped trajectory imparted either to the mid-section or exit-end thereof, provision being made further for an anchor-point in the guise of a hole wherein the rod entry-end is caused to slide and which basically prohibits said entry-end from moving in a direction perpendicular to the axis of the rod itself.

4) Machine according to claim 1 characterised by the fact that the work-surface of said channel (5) is inclined gently upward and away through its own path of conveyance and of transverse width equal, basically speaking, to the transverse length of blade (3) and to the width of the machine overall.

5) Machine according to claim 3 characterised by the fact that motion is imparted to each of the sets of rods (21) by means of a transverse and horizontal shaft (7) whose ends are affixed eccentrically to a pair of bearer-wheels (22) made fast to the machine chassis and turning about a common axis of rotation lying parallel with said shaft (7); one of said wheels (22) being driven in such a way as to transmit a rotary movement described eccentrically and at high frequency whereby said shaft (7) maintains a parallel with itself at all times; said shaft (7) being accommodated within a tubular element (8) which turns freely about the axis of said shaft (7) and which affords support to one respective set of rods (21), these made fast thereto either at their mid-section or at
their exit-end; the motion-cycle of one shaft (7)
being retarded with respect to the other by one
half-revolution.

6) Machine according to claim 3 characterised by the
fact that the entry-end of each rod (21) inserts
into a hole located at the rear edge (3a) of said
blade (3), the rod able to slide thus along its
own axis and to oscillate about the hole-centre,
said blade (3) being made fast to the machine
chassis.

7) Machine according to claim 1 characterised by the
fact that the blade (3) is fixed and moves as one
with the machine chassis, the latter carried at its
front end by two pairs of wheels (6) mounted upon
rocker-arms, the forward section of said chassis
being adjustable for height with respect to said
wheels (6).

8) Machine according to claim 4 characterised by the
fact that it comprises a metal chute (16) located
immediately to the rear of said channel (5) and
designed to offload the crop onto the ground at
the rear of the machine, said chute (16) being in
receipt of rotary movement imparted by a transverse
and horizontal shaft (17) driven so as to rotate
eccentrically and at high frequency in such a way
that it maintains parallel with itself at all times;
said shaft (17) made fast to the chute (16) by way
of bearings.

0069088

Fig. 1

0069088

Fig. 2

**Fig. 2A**

**Fig. 3**

8806900

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | A 01 D 31/00 |
| A | GB - A - 698 724 (KOLWEYH) <br> * Fig. 1-3 * | 1,2,8 | |
| A | FR - A - 954 327 (CATRY) <br> * Fig. 1,2 * | 1,2,8 | |
| A | FR - A - 1 370 323 (BOUETTE) <br> * Fig. 1, 2 * | 1,2 | |
| A | FR - A - 971 619 (LAWAETZ) <br> * Fig. 1, 2 * | 1,2 | **TECHNICAL FIELDS SEARCHED (Int.Cl. 3)** <br><br> A 01 D 15/00 |
| A | US - A - 2 651 157 (DRAKE) <br> * Fig. 1, 2, 5 * | 1,4 | A 01 D 17/00 <br> A 01 D 25/00 <br> A 01 D 31/00 |
| A | DD - A - 100 386 (KRÜGER) <br> * Page 2, lines 4-12 * <br> ---- | 1 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| X | | |
| Place of search | Date of completion of the search | Examiner |
| VIENNA | 23-09-1982 | RUMLER |

EPO Form 1503.1 06.78